# EUROPÄISCHE PATENTSCHRIFT

(11) **EP 3 931 474 B1**
(45) Veröffentlichungstag und Bekanntmachung des Hinweises auf die Patenterteilung: **19.10.2022**
(21) Anmeldenummer: 20704457.9
(22) Anmeldetag: 04.02.2020
(51) Int. Cl.: F16K 11/16, F16K 31/524, F16K 27/02, F16K 11/00, E03C 1/04

(54) **ARMATUR MIT AUSZIEHBAREM SCHLAUCH**
FAUCET WITH EXTENDABLE HOSE
ROBINET AVEC TUYAU EXTENSIBLE

(30) Priorität: 26.02.2019 DE 102019104773
(43) Veröffentlichungstag der Anmeldung: 05.01.2022
(73) Patentinhaber: Grohe AG, 58653 Hemer (DE)
(72) Erfinder: HOPFAUF, Harry, 59494 Soest (DE); STEINHOFF, Stefan, 59846 Sundern (DE)
(86) Internationale Anmeldenummer: PCT/EP2020/052708
(87) Internationale Veröffentlichungsnummer: WO 2020/173672

(56) Entgegenhaltungen:
- DE-U1- 20 312 478
- JP-A- S6 037 468

## Beschreibung

Die Erfindung betrifft eine Sanitärarmatur mit ausziehbarem Schlauch bzw. so genannte "Pullout"-Armatur. Die Armatur kann z. B. an einer sanitären Anlage, z. B. einem Waschbecken, einer Badewanne oder Ähnlichem, befestigt werden. Die Armatur ist insbesondere eine Mischbatterie bzw. ein Wasserhahn.

"Pull-out"-Armaturen zeichnen sich dadurch aus, dass ein Fluidauslass beweglich an der Armatur angeordnet ist. Dabei ist ein Fluidauslass über einen Schlauch mit der Armatur verbunden, wobei der Schlauch innerhalb der Armatur angeordnet ist bzw. aus der Armatur herausziehbar bzw. wieder einfahrbar ist.

Aus der WO 2016/118529 ist eine solche Armatur bekannt. Üblicherweise wird bei Pull-out-Armaturen ein seitlich am Armatur-Gehäuse positionierter Einhebelmischer verwendet. Dies ist notwendig bedingt durch die Durchführung des Schlauchs durch das Armatur-Gehäuse. Der durch den Schlauch verdrängte Bauraum macht eine Unterbringung eines Mischventils direkt in der Armatur sehr schwierig. In der WO 2016/118529 ist das Mischventil beabstandet von dem Gehäuse der Armatur angeordnet.

DE 203 12 478 U1 offenbart den Oberbegriff des Anspruchs 1.

Aufgabe der vorliegenden Erfindung ist es, die mit Bezug auf den Stand der Technik angeführten Probleme zumindest teilweise zu lösen. Insbesondere soll eine Armatur vorgeschlagen werden, die kompakter aufgebaut ist.

Zur Lösung dieser Aufgaben trägt eine Armatur mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Armatur vorgeschlagen, zumindest aufweisend
- ein Gehäuse mit einer Gehäusewandung,
- eine in dem Gehäuse angeordnete Mischkartusche mit
   o einem ersten Zulaufanschluss, einem zweiten Zulaufanschluss, einem Mischbereich zum Mischen eines über die Zulaufanschlüsse in den Mischbereich einströmenden Fluids, und einem Ablaufanschluss, über den das Fluid aus dem Mischbereich und aus der Mischkartusche abströmen kann;
- eine Betätigungseinheit zur Betätigung der Mischkartusche sowie
- einen Schlauch.

Der ausziehbare ("Pull-out"-)Schlauch ist über ein erstes Ende mit dem Ablaufanschluss verbunden und mit einem zweiten Ende beweglich an dem Gehäuse angeordnet. Der Schlauch erstreckt sich durch einen Kanal der Mischkartusche hindurch, wobei der Mischbereich zumindest teilweise zwischen dem Kanal und der Gehäusewandung angeordnet ist.

In der Mischkartusche erfolgt insbesondere ein Mischen eines Fluids zur Einstellung einer vorbestimmbaren Temperatur. Insbesondere kann durch die Mischkartusche (zusätzlich) eine Durchflussmenge eingestellt werden. Die Einstellung der Temperatur bzw. der Durchflussmenge erfolgt insbesondere über die Betätigungseinheit.

Hier wird nun vorgeschlagen, dass sich der Schlauch, ausgehend von dem ersten Ende (das fest mit der Armatur bzw. mit dem Ablaufanschluss strömungstechnisch verbunden ist) durch die Mischkartusche hindurch bis hin zum zweiten Ende erstreckt. Das zweite Ende umfasst insbesondere einen Fluidauslass.

Insbesondere kann ein Fluid über den ersten Zulaufanschluss und/oder den zweiten Zulaufanschluss in den Mischbereich einströmen. Ausgehend vom Mischbereich kann das (ggf. gemischte Fluid) über den Ablaufanschluss in den Schlauch einströmen. Das Fluid kann insbesondere über einen Fluidauslass aus dem Schlauch austreten.

Die Bereitstellung einer Mischkartusche mit einem Kanal ermöglicht nun die Anordnung der Mischkartusche innerhalb des Gehäuses der Armatur, so dass eine platzsparende Anordnung realisiert ist. Der Schlauch kann so durch den Kanal hindurchgeführt werden.

Insbesondere sind die Gehäusewandung (zumindest im Bereich der Mischkartusche) und der Kanal koaxial zueinander angeordnet. Insbesondere ist der Kanal also durch eine ringförmige Mischkartusche gebildet, wobei der Kanal zentral angeordnet ist.

Die Mischkartusche ist nach außen fluiddicht ausgeführt, so dass ein über die Zulaufanschlüsse einströmendes Fluid nur über den Ablaufanschluss abströmen kann.

Insbesondere sind die Zulaufanschlüsse und der Ablaufanschluss auf einem gemeinsamen Durchmesser und in der Umfangsrichtung benachbart zueinander angeordnet. Der Kanal ist innerhalb des Durchmessers angeordnet. Kanal, Durchmesser und Gehäusewandung der Armatur sind insbesondere koaxial zueinander angeordnet.

Insbesondere ist der erste Zulaufanschluss durch ein erstes Ventil und der zweite Zulaufanschluss durch ein zweites Ventil zu öffnen und zu schließen. Über die Ventile kann ein Volumenstrom, der über den jeweiligen Zulaufanschluss in den Mischbereich und von da aus in den (nicht verschließbaren) Ablaufanschluss strömt, eingestellt werden. Über das Zusammenwirken beider Ventile kann z. B. eine Einstellung einer Temperatur des über den Mischbereich geleiteten Fluids erfolgen.

Insbesondere weist die Mischkartusche ein Kunststoffgehäuse auf, so dass eine thermische Isolierung des Mischbereichs von der Gehäusewandung der Armatur sichergestellt werden kann.

Insbesondere kann mindestens ein Bedienungselement an der Mischkartusche bzw. der Armatur vorgesehen sein, durch das ein Fluiddurchfluss ein- und/oder ausgeschaltet werden kann. Die Regelung eines Volumenstroms bzw. einer Temperatur des Fluids wird insbesondere in jedem Fall über die Betätigungseinheit vorgenommen.

Insbesondere wirken das erste Ventil über ein erstes Betätigungsende und das zweite Ventil über ein zweites Betätigungsende mit der Betätigungseinheit zusammen.

Insbesondere ist die Betätigungseinheit benachbart zur Mischkartusche angeordnet und die Betätigung der Ventile durch die Betätigungseinheit erfolgt mechanisch (also z. B. infolge einer mechanischen Kontaktierung).

Insbesondere weist die Betätigungseinheit eine gegenüber den Betätigungsenden verdrehbare Kulisse auf, wobei infolge einer Drehung der Kulisse in einer Umfangsrichtung die Betätigungsenden entlang einer axialen Richtung verlagerbar sind. Die Betätigungsenden bilden mit der Kulisse insbesondere einen Gleitsitz aus, so dass eine Relativbewegung zwischen Kulisse und Betätigungsenden entlang der Umfangsrichtung ermöglicht wird.

Insbesondere erstreckt sich die Kulisse ringförmig (also entlang der Umfangsrichtung geschlossen) um eine zentrale Öffnung, wobei sich der Schlauch (z. B. ausgehend von dem ersten Ende, durch den Kanal und anschließend) durch die Öffnung entlang der axialen Richtung erstreckt.

Insbesondere ist die Kulisse mit einem Teil der Gehäusewandung verbunden, so dass über eine Verdrehung des Teils der Gehäusewandung eine Verdrehung der Kulisse erfolgt. Insbesondere ist die Kulisse also von außerhalb des Gehäuses durch einen Bediener betätigbar.

Insbesondere sind die Betätigungsenden über jeweils eine Feder hin zur Kulisse verlagert angeordnet, so dass eine Anlage der Betätigungsenden an der Kulisse gewährleistet ist. Insbesondere ist jede Feder eine Druckfeder, die bei Verdrehen der Kulisse zwischen einem stark vorgespannten und einem schwach vorgespannten Zustand unterschiedlich stark vorspannbar ist. Die dauerhaft vorliegende Vorspannung gewährleistet, dass die Betätigungsenden (immer) an der Kulisse anliegen.

Insbesondere sind die Betätigungsenden an einer ersten Stirnseite und die Zulaufanschlüsse und der Ablaufanschluss an einer, der ersten Stirnseite gegenüberliegenden zweiten Stirnseite der Mischkartusche angeordnet.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder einen Teil der Mehrzahl dieser Bauteile gleichermaßen gelten, dies ist aber nicht zwingend. Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Armatur in einer Seitenansicht;
- Fig. 2: eine Mischkartusche in einer ersten perspektivischen Ansicht;
- Fig. 3:: die Mischkartusche nach Fig. 2 in einer zweiten perspektivischen Ansicht;
- Fig. 4:: einen ersten Ausschnitt der Armatur nach Fig. 1 in einer Seitenansicht im Schnitt;
- Fig. 5:: einen zweiten Ausschnitt der Armatur nach Fig. 1 und 4 in einer Seitenansicht im Schnitt;
- Fig. 6:: einen dritten Ausschnitt der Armatur nach Fig. 1 und 4 und 5 in einer Seitenansicht im Schnitt;
- Fig. 7:: den dritten Ausschnitt nach Fig. 6 in einer perspektivischen Ansicht im Schnitt; und
- Fig. 8:: einen vierten Ausschnitt der Armatur nach Fig. 1 und 4 bis 7 in einer Seitenansicht im Schnitt.

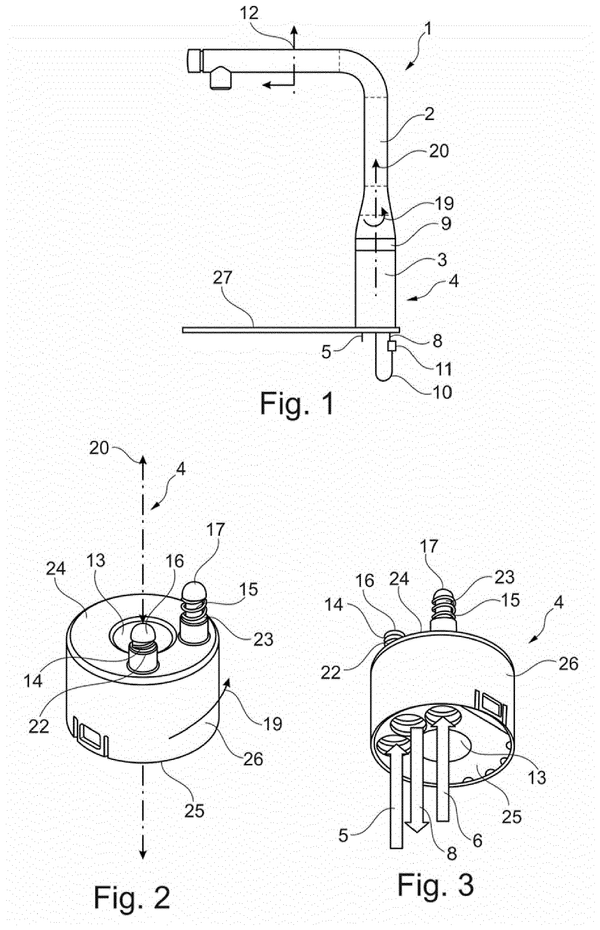

Die Fig. 1 zeigt eine (Sanitär- und/oder "_{P}ull-out"-)Armatur 1 in einer Seitenansicht. Die Armatur 1 wird an einer sanitären Anlage 27 angeordnet und befestigt. Das Gehäuse 2 der Armatur 1 ist nur auf einer Seite der sanitären Anlage 27 angeordnet. Die Zulaufanschlüsse 5, 6 und der Ablaufanschluss 8 der Mischkartusche erstrecken sich hin zur anderen Seite der sanitären Anlage 27. Der Ablaufanschluss 8 ist mit einem ersten Ende 11 eines ("Pull-out"-)Schlauchs 10 verbunden. Der Schlauch erstreckt sich durch das Gehäuse 2 der Armatur 1 hindurch bis zu einem zweiten Ende 12, das beweglich (herausziehbar und wieder einsteckbar) an dem Gehäuse 2 angeordnet ist. In der Gehäusewandung 3 des Gehäuses 2 ist eine Betätigungseinheit 9 angeordnet, durch die eine Durchflussmenge und eine Temperatur des durch die Armatur 1 geleiteten Fluids eingestellt werden kann. Die Betätigungseinheit 9 ist in der Umfangsrichtung 19 gegenüber dem Gehäuse 2 drehbar.

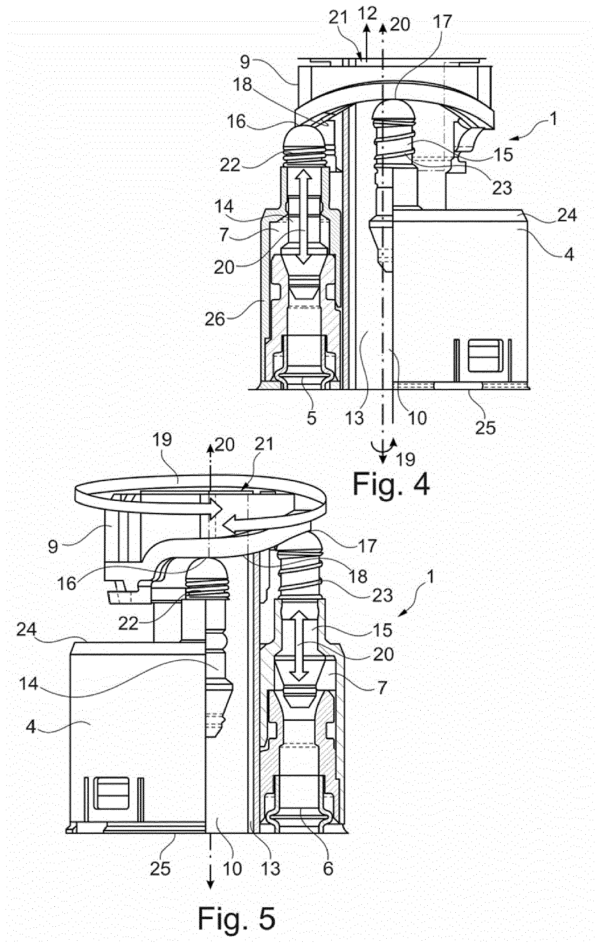

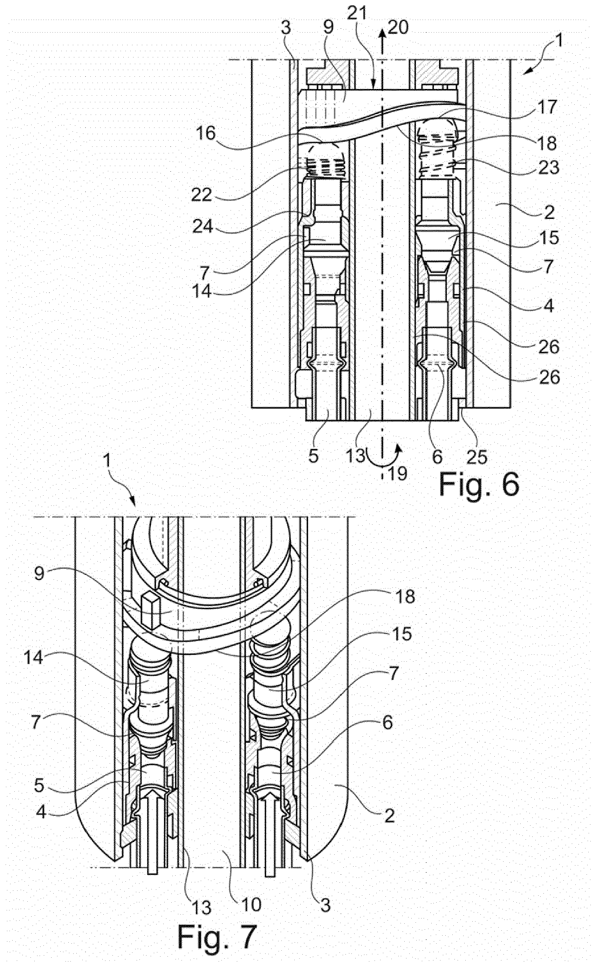

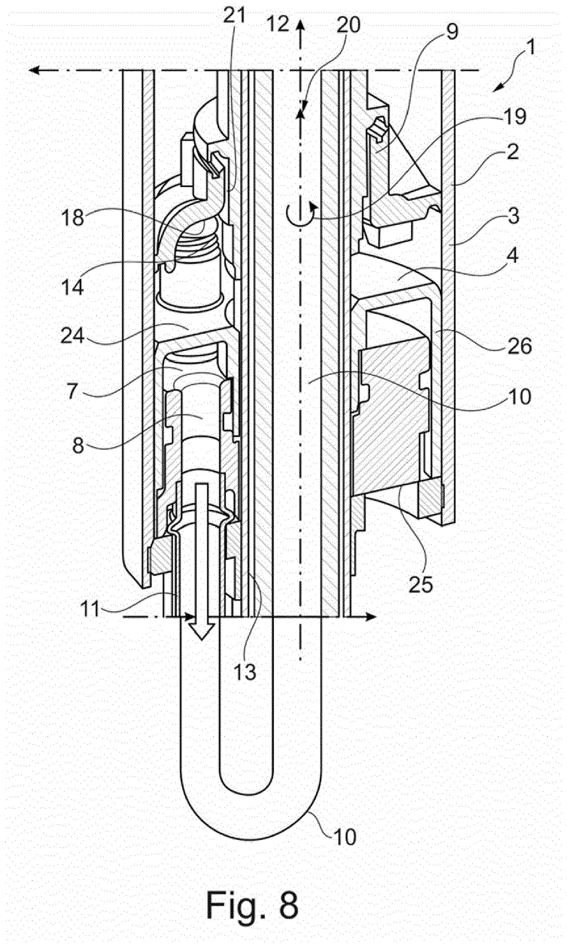

Fig. 2 zeigt eine Mischkartusche 4 in einer ersten perspektivischen Ansicht. Fig. 3 zeigt die Mischkartusche 4 nach Fig. 2 in einer zweiten perspektivischen Ansicht. Fig. 4 zeigt einen ersten Ausschnitt der Armatur 1 nach Fig. 1 in einer Seitenansicht im Schnitt. Fig. 5 zeigt einen zweiten Ausschnitt der Armatur 1 nach Fig. 1 und 4 in einer Seitenansicht im Schnitt. Fig. 6 zeigt einen dritten Ausschnitt der Armatur 1 nach Fig. 1 und 4 und 5 in einer Seitenansicht im Schnitt. Fig. 7 zeigt den dritten Ausschnitt nach Fig. 6 in einer perspektivischen Ansicht im Schnitt. Fig. 8 zeigt einen vierten Ausschnitt der Armatur 1 nach Fig. 1 und 4 bis 7 in einer Seitenansicht im Schnitt. Die Fig. 2 bis 8 werden im Folgenden gemeinsam beschrieben.

Die Mischkartusche 4 umfasst einen ersten Zulaufanschluss 5, einen zweiten Zulaufanschluss 6, einen Mischbereich 7 (siehe z. B. Fig. 4) zum Mischen eines über die Zulaufanschlüsse 5, 6 in den Mischbereich 7 einströmenden Fluids, und einen Ablaufanschluss 8, über den das Fluid aus dem Mischbereich 7 und aus der Mischkartusche 4 abströmen kann. Der Schlauch 10 wird über ein erstes Ende 11 mit dem Ablaufanschluss 8 verbunden. Ausgehend von dem ersten Ende 11 erstreckt sich der Schlauch 10 durch einen Kanal 13 der Mischkartusche 4 hindurch, wobei der Mischbereich 7 zumindest teilweise zwischen dem Kanal 13 und der Gehäusewandung 3 angeordnet ist.

Die Gehäusewandung 3 (liegt an dem Kartuschengehäuse 26 an) und der Kanal 13 sind koaxial zueinander angeordnet. Der Kanal 13 ist durch eine ringförmige Mischkartusche 4 gebildet, wobei der Kanal 13 zentral angeordnet ist. Die Zulaufanschlüsse 5, 6 und der Ablaufanschluss 8 sind auf einem gemeinsamen Durchmesser und in der Umfangsrichtung 19 benachbart zueinander angeordnet. Der Kanal 13 ist innerhalb des Durchmessers angeordnet. Kanal 13, Durchmesser und Gehäusewandung 3 der Armatur 1 sind im Bereich der Mischkartusche 4 koaxial zueinander angeordnet.

Der erste Zulaufanschluss 4 ist durch ein erstes Ventil 14 und der zweite Zulaufanschluss 5 durch ein zweites Ventil 15 zu öffnen und zu schließen. Das erste Ventil 14 wirkt über ein erstes Betätigungsende 16 (einen halbkugelförmigen Kopf) und das zweite Ventil 15 über ein zweites Betätigungsende 17 mit der Betätigungseinheit 9 zusammen. Die Betätigungseinheit 9 ist benachbart zur Mischkartusche 4 angeordnet und die Betätigung der Ventile 14, 15 durch die Betätigungseinheit 9 erfolgt mechanisch (also infolge einer mechanischen Kontaktierung der Betätigungsenden 16, 17 mit der Kulisse 18 der Betätigungseinheit).

Die Betätigungseinheit 9 weist eine gegenüber den Betätigungsenden 16, 17 verdrehbare Kulisse 18 auf, wobei infolge einer Drehung der Kulisse 18 in einer Umfangsrichtung 19 die Betätigungsenden 16, 17 und damit die Ventilkörper der Ventile 14, 15 entlang einer axialen Richtung 20 verlagerbar sind. Die Betätigungsenden 16, 17 bilden mit der Kulisse 18 einen Gleitsitz aus, so dass eine Relativbewegung zwischen Kulisse 18 und Betätigungsenden 16, 17 entlang der Umfangsrichtung 19 ermöglicht wird.

Die Kulisse 18 erstreckt sich ringförmig (also entlang der Umfangsrichtung 19 geschlossen) um eine zentrale Öffnung 21, wobei sich der Schlauch 10 ausgehend von dem ersten Ende 11, durch den Kanal 13 und anschließend durch die Öffnung 21 entlang der axialen Richtung 20 erstreckt.

Die Kulisse 18 ist mit einem Teil der Gehäusewandung 3 verbunden, so dass über eine Verdrehung des Teils der Gehäusewandung 3 eine Verdrehung der Kulisse 18 erfolgt. Die Kulisse 18 ist also von außerhalb des Gehäuses 2 durch einen Bediener betätigbar.

Das erste Betätigungsende 16 ist über eine erste Feder 22 und das zweite Betätigungsende 17 über eine zweite Feder 23 hin zur Kulisse 18 vorgespannt und damit hin zur Kulisse 18 verlagert angeordnet, so dass eine Anlage der Betätigungsenden 16, 17 an der Kulisse 18 gewährleistet ist. Die Federn 22, 23 sind als Druckfedern ausgeführt, die bei Verdrehen der Kulisse 18 zwischen einem stark vorgespannten und einem schwach vorgespannten Zustand unterschiedlich stark vorspannbar ist. Die dauerhaft vorliegende Vorspannung gewährleistet, dass die Betätigungsenden 16, 17 dauerhaft an der Kulisse 18 anliegen.

Die Betätigungsenden 16, 17 sind an einer ersten Stirnseite 24 und die Zulaufanschlüsse 5, 6 und der Ablaufanschluss 8 an einer, der ersten Stirnseite 24 gegenüberliegenden zweiten Stirnseite 25 der Mischkartusche 4 angeordnet.

### Bezugszeichenliste

- 1: Armatur
- 2: Gehäuse
- 3: Gehäusewandung
- 4: Mischkartusche
- 5: erster Zulaufanschluss
- 6: zweiter Zulaufanschluss
- 7: Mischbereich
- 8: Ablaufanschluss
- 9: Betätigungseinheit
- 10: Schlauch
- 11: erstes Ende
- 12: zweites Ende
- 13: Kanal
- 14: erstes Ventil
- 15: zweites Ventil
- 16: erstes Betätigungsende
- 17: zweites Betätigungsende
- 18: Kulisse
- 19: Umfangsrichtung
- 20: axiale Richtung
- 21: Öffnung
- 22: erste Feder
- 23: zweite Feder
- 24: erste Stirnseite
- 25: zweite Stirnseite
- 26: Kartuschengehäuse
- 27: Anlage

## Patentansprüche

1. Armatur (1), zumindest aufweisend
• ein Gehäuse (2) mit einer Gehäusewandung (3),
• eine in dem Gehäuse (2) angeordnete Mischkartusche (4) mit
o einem ersten Zulaufanschluss (5), einem zweiten Zulaufanschluss (6), einem Mischbereich (7) zum Mischen eines über die Zulaufanschlüsse (5, 6) in den Mischbereich (7) einströmenden Fluids, und einem Ablaufanschluss (8), über den das Fluid aus dem Mischbereich (7) und aus der Mischkartusche (4) abströmen kann;
• eine Betätigungseinheit (9) zur Betätigung der Mischkartusche (4) sowie
• einen Schlauch (10);
wobei der Schlauch (10) über ein erstes Ende (11) mit dem Ablaufanschluss (8) verbunden und mit einem zweiten Ende (12) beweglich an dem Gehäuse (2) angeordnet ist;
**dadurch gekennzeichnet, dass** sich
der Schlauch (10) durch einen Kanal (13) der Mischkartusche (4) hindurch erstreckt, wobei der Mischbereich (7) zumindest teilweise zwischen dem Kanal (13) und der Gehäusewandung (3) angeordnet ist.

2. Armatur (1) nach Patentanspruch 1, wobei die Gehäusewandung (3) zumindest im Bereich der Mischkartusche (4) und der Kanal (13) koaxial zueinander angeordnet sind.

3. Armatur (1) nach einem der vorhergehenden Patentansprüche, wobei der erste Zulaufanschluss (5) durch ein erstes Ventil (14) und der zweite Zulaufanschluss (6) durch ein zweites Ventil (15) zu öffnen und zu schließen ist.

4. Armatur (1) nach Patentanspruch 3, wobei das erste Ventil (14) über ein erstes Betätigungsende (16) und das zweite Ventil (15) über ein zweites Betätigungsende (17) mit der Betätigungseinheit (9) zusammenwirkt.

5. Armatur (1) nach Patentanspruch 4, wobei die Betätigungseinheit (9) benachbart zur Mischkartusche (4) angeordnet ist und die Betätigung der Ventile (14, 15) durch die Betätigungseinheit (9) mechanisch erfolgt.

6. Armatur (1) nach einem der vorhergehenden Patentansprüche 4 und 5, wobei die Betätigungseinheit (9) eine gegenüber den Betätigungsenden (16, 17) verdrehbare Kulisse (18) aufweist, wobei infolge einer Drehung der Kulisse (18) in einer Umfangsrichtung (19) die Betätigungsenden (16, 17) entlang einer axialen Richtung (20) verlagerbar sind.

7. Armatur (1) nach Patentanspruch 6, wobei sich die Kulisse (18) ringförmig um eine zentrale Öffnung (21) erstreckt, wobei sich der Schlauch (10) durch die Öffnung (21) entlang der axialen Richtung (20) erstreckt.

8. Armatur (1) nach einem der vorhergehenden Patentansprüche 6 und 7, wobei die Kulisse (18) mit einem Teil der Gehäusewandung (3) verbunden ist, so dass über eine Verdrehung des Teils der Gehäusewandung (3) eine Verdrehung der Kulisse (18) erfolgt.

9. Armatur (1) nach einem der vorhergehenden Patentansprüche 6 bis 8, wobei die Betätigungsenden (16, 17) über jeweils eine Feder (22, 23) hin zur Kulisse (18) verlagert angeordnet sind, so dass eine Anlage der Betätigungsenden (16, 17) an der Kulisse (18) gewährleistet ist.

10. Armatur (1) nach einem der vorhergehenden Patentansprüche 4 bis 9, wobei die Betätigungsenden (16, 17) an einer ersten Stirnseite (24) und die Zulaufanschlüsse (5, 6) und der Ablaufanschluss (8) an einer, der ersten Stirnseite (24) gegenüberliegenden zweiten Stirnseite (25) der Mischkartusche (4) angeordnet sind.

## Claims

1. A fitting (1), at least having
• a housing (2) with a housing wall (3),
• a mixing cartridge (4) arranged in the housing (2), with
o a first feed connection (5), a second feed connection (6), a mixing region (7) for mixing a fluid flowing into the mixing region (7) via the feed connections (5, 6), and an outlet connection (8) via which the fluid can flow out of the mixing region (7) and out of the mixing cartridge (4);
• an actuation unit (9) for actuating the mixing cartridge (4) and
• a hose (10);
wherein the hose (10) is connected to the outlet connection (8) via a first end (11) and arranged in a moveable manner on the housing (2) via a second end (12); **characterized in that** the hose (10) extends through a channel (13) of the mixing cartridge (4),
wherein the mixing region (7) is arranged at least partially between the channel (13) and the housing wall (3) .

2. The fitting (1) according to claim 1, wherein the housing wall (3), at least in the region of the mixing cartridge (4), and the channel (13) are arranged coaxially with each other.

3. The fitting (1) according to any one of the preceding claims, wherein the first feed connection (5) is opened and closed by a first valve (14) and the second feed connection (6) is opened and closed by a second valve (15) .

4. The fitting (1) according to claim 3, wherein the first valve (14) cooperates with the actuation unit (9) via a first actuation end (16) and the second valve (15) cooperates with the actuation unit via a second actuation end (17).

5. The fitting (1) according to claim 4, wherein the actuation unit (9) is arranged adjacent to the mixing cartridge (4) and actuating the valves (14, 15) is carried out mechanically by means of the actuation unit (9) .

6. The fitting (1) according to any one of the preceding claims 4 and 5, wherein the actuation unit (9) has a link (18) which can be turned with respect to the actuation ends (16, 17), wherein the actuation ends (16, 17) are displaceable along an axial direction (20) as a result of a turning of the link (18) in a circumferential direction (19).

7. The fitting (1) according to claim 6, wherein the link (18) extends annularly around a central opening (21), wherein the hose (10) extends through the opening (21) along the axial direction (20).

8. The fitting (1) according to any one of the preceding claims 6 and 7, wherein the link (18) is connected to a portion of the housing wall (3) such that a turning of the link (18) is carried out via a turning of the portion of the housing wall (3).

9. The fitting (1) according to any one of the preceding claims 6 to 8, wherein the actuation ends (16, 17) are each arranged so as to be shifted toward the link (18) by a respective spring (22, 23) such that an abutment of the actuation ends (16, 17) against the link (18) is ensured.

10. The fitting (1) according to any one of the preceding claims 4 to 9, wherein the actuation ends (16, 17) are arranged on a first end face (24) and the feed connections (5, 6) and the outlet connection (8) are arranged on a second end face (25) of the mixing cartridge (4) opposite the first end face (24).

## Revendications

1. Robinetterie (1), comportant au moins
• un corps (2), pourvu d'une paroi de corps (3),
• une cartouche mélangeuse (4) placée dans le corps (2), comprenant
o un premier raccord d'arrivée (5), un deuxième raccord d'arrivée (6), une zone de mélange (7) pour mélanger un fluide affluant dans la zone de mélange (7) via les raccords d'arrivée (5, 6), et un raccord d'évacuation (8), via lequel le fluide peut s'écouler hors de la zone de mélange (7) et hors de la cartouche mélangeuse (4) ;
• une unité d'actionnement (9), destinée à actionner la cartouche mélangeuse (4) et
• un flexible (10) ;
le flexible (10) étant relié via une première extrémité (11) avec le raccord d'évacuation (8) et via une deuxième extrémité (12), étant placé de manière mobile sur le corps (2) ;
**caractérisée en ce que** le flexible (10) s'étend à travers une canalisation (13) de la cartouche mélangeuse (4), la zone de mélange (7) étant placée au moins en parte entre la canalisation (13) et la paroi de corps (3).

2. Robinetterie (1) selon la revendication 1, la paroi de corps (3) au moins dans la zone de la cartouche mélangeuse (4) et la canalisation (13) sont placées de manière coaxiale l'une par rapport à l'autre.

3. Robinetterie (1) selon l'une quelconque des revendications précédentes, le premier raccord d'arrivée (5) devant s'ouvrir et se fermer via une première soupape (14) et le deuxième raccord d'arrivée (6) devant s'ouvrir et se fermer via une deuxième soupape (15).

4. Robinetterie (1) selon la revendication 3, la première soupape (14) interagissant via une première extrémité d'actionnement (16) et la deuxième soupape (15) interagissant via une deuxième extrémité d'actionnement (17) avec l'unité d'actionnement (9).

5. Robinetterie (1) selon la revendication 4, l'unité d'actionnement (9) étant placée au voisinage de la cartouche mélangeuse (4) et l'actionnement des soupapes (14, 15) par l'unité d'actionnement (9) ayant lieu par voie mécanique.

6. Robinetterie (1) selon l'une quelconque des revendications précédentes 4 et 5, l'unité d'actionnement (9) comportant une coulisse (18) rotative par rapport aux extrémités d'actionnement (16, 17), suite à une rotation de la coulisse (18) dans une direction périphérique (19), les extrémités d'actionnement (16, 17) étant déplaçables le long d'une direction axiale (20).

7. Robinetterie (1) selon la revendication 6, la coulisse (18) s'étendant sous forme annulaire autour d'un orifice (21) central, le flexible (10) s'étendant à travers l'orifice (21) le long de la direction axiale (20) .

8. Robinetterie (1) selon l'une quelconque des revendications précédentes 6 et 7, la coulisse (18) étant reliée avec une partie de la paroi de corps (3), de telle sorte que par une rotation d'une partie de la paroi de corps (3), une rotation de la coulisse (18) ait lieu.

9. Robinetterie (1) selon l'une quelconque des revendications précédentes 6 à 8, les extrémités d'actionnement (16, 17) étant placées via chaque fois un ressort (22, 23) en étant déplacées vers la coulisse (18), de sorte à assurer un appui des extrémités d'actionnement (16, 17) sur la coulisse (18) .

10. Robinetterie (1) selon l'une quelconque des revendications précédentes 4 à 9, les extrémités d'actionnement (16, 17) étant placées sur une première face frontale (24) et les raccords d'arrivée (5, 6) et le raccord d'évacuation (8) étant placés sur une deuxième face frontale (25) de la cartouche mélangeuse (4), en vis-à-vis de la première face frontale (24).
